# FASCICULE DE BREVET EUROPEEN

(11) **EP 1 110 451 B1**
(45) Date de publication et mention de la délivrance du brevet: **04.08.2004**
(21) Numéro de dépôt: 00403602.6
(22) Date de dépôt: 20.12.2000
(51) Int. Cl.: A01M 29/00

(54) **Dispositif pour empêcher le stationnement de volatiles, tels que des pigeons, sur une surface**
Abwehrvorrichtung für Vögel, wie zum Beispiel Tauben, auf einer Fläche
Bird proofing device, for instance for pigeons on a surface

(30) Priorité: 21.12.1999 FR 9916192
(43) Date de publication de la demande: 27.06.2001
(73) Titulaire: Karaa, Camil, 92200 Neuilly Sur Seine (FR)
(72) Inventeur: Karaa, Camil, 92200 Neuilly Sur Seine (FR)
(74) Mandataire: Leszczynski, André

(56) Documents cités:
- WO-A-97/36478
- DE-U- 9 202 952
- FR-A- 2 693 080
- US-A- 2 888 716

## Description

La présente invention est relative à un dispositif destiné à empêcher le stationnement de volatiles, notamment de pigeons, sur des éléments et surfaces sur lesquels ceux-ci se posent habituellement en ville.

On connaît déjà de tels dispositifs agencés pour dissuader les volatiles de se poser sur la surface concernée, telle qu'une corniche, un rebord de fenêtre, un balcon, une toiture, une statue, un monument ou un élément de mobilier urbain.

Les dispositifs connus comportent généralement une plaque de support allongée, notamment en matière plastique semi-rigide, apte à être fixée par sa face inférieure sur une surface à protéger et comportant en saillie de sa face supérieure une ou plusieurs rangées de tiges métalliques.

Le déposant a déjà décrit dans FR-A-2 693 080 un tel dispositif dans lequel la plaque de support est constituée d'un chapelet d'éléments modulaires comportant chacun un bossage central muni de trous traversants pour la réception et la retenue de tiges disposées en une ou plusieurs rangées, les tiges de l'une au moins des rangées étant orientées vers l'extérieur et inclinées par rapport à un plan perpendiculaire à la plaque de support.

Un tel dispositif, qui a représenté un progrès important par rapport aux dispositifs antérieurement connus du fait de la disposition particulière des tiges et leur résistance à l'arrachement plus importante ne se prête toutefois, de même d'ailleurs que les autres dispositifs connus, qu'à une utilisation où la surface à protéger fait partie d'une structure fixe et présente une largeur relativement importante.

Les dispositifs connus ne sont en particulier pas adaptés à protéger des éléments mobiles, tels que par exemple des battants de volets, sur le chant supérieur desquels des volatiles peuvent se poser lorsque le volet est en position ouverte ou partiellement ouverte.

La présente invention se propose précisément de réaliser un dispositif utilisable pour empêcher le stationnement de volatiles sur des surfaces de faible largeur, en particulier d'éléments mobiles, tels que des battants de volets.

Le dispositif selon l'invention comprend une plaque de support allongée apte à être fixée par sa face inférieure, notamment par collage ou vissage, sur un élément à protéger, comportant en saillie de sa face supérieure au moins une rangée de tiges, notamment métalliques, lesdites tiges étant retenues mécaniquement à l'intérieur de trous traversants réalisés dans des bossages en saillie d'une partie de base de la plaque de support, chacune desdites tiges étant recourbée à sa sortie dudit bossage de manière à s'étendre selon un angle faible, de préférence compris entre environ 10 et environ 30° par rapport au plan de la partie de base, les extrémités libres desdites tiges se trouvant sensiblement au niveau dudit plan.

Le dispositif selon l'invention peut être en particulier utilisé pour empêcher des volatiles tels que des pigeons de se poser sur le chant supérieur de battants de volets tels que des volets en bois, la plaque de support étant alors fixée, de préférence par vissage, sur la face du volet orientée vers le mur lorsque le volet est en position d'ouverture, au voisinage du bord supérieur du battant. Les tiges dépassent alors sensiblement vers le haut du chant du battant et, du fait qu'elles sont orientées vers le haut et légèrement inclinées vers l'extérieur, constituent un barrage pour les volatiles à l'aplomb du chant du battant.

Les tiges sont de préférence agencées de manière que leurs extrémités libres, une fois le dispositif mis en place, soient sensiblement à l'aplomb du milieu de la largeur du chant supérieur du battant correspondant.

La mise en place d'un tel dispositif sur un battant de volet n'entrave en aucune manière sa fermeture, l'élasticité des tiges métalliques permettant même une mise en place sur des battants ou autres éléments mobiles destinés à être logés dans une encoignure en position fermée.

Dans le but de mieux faire comprendre l'invention, on va maintenant décrire à titre d'exemple, nullement limitatif, un mode de réalisation en se référant au dessin annexé dans lequel :
- la figure 1 est une vue en perspective fragmentaire d'un dispositif selon la présente invention,
- la figure 2 illustre le montage d'un dispositif selon l'invention sur un battant de volet illustré en position partielle d'ouverture, et
- les figures 3 et 4 illustrent le montage d'un dispositif selon l'invention sur les battants de volets d'une fenêtre en position d'ouverture et respectivement de fermeture des volets.

Le dispositif selon l'invention se compose d'une plaque de support, désignée globalement par 1, moulée d'un seul tenant en matière plastique semi-rigide et constituée d'un chapelet d'éléments modulaires 2, réunis entre eux par des zones amincies 3, munies le cas échéant d'une encoche (non représentée), de manière à permettre d'ajuster, par simple cassure, le nombre d'éléments modulaires 2 et donc la longueur de la plaque de support 1 à la longueur de la surface à protéger.

Chaque élément modulaire comporte une partie de base 4 munie d'un bossage 5 en saillie, pourvu de deux trous traversants 6.

Des tiges en fil métallique ayant la forme générale d'un V sont fixées par-dessous sur chaque élément modulaire 2, en traversant les trous 6.

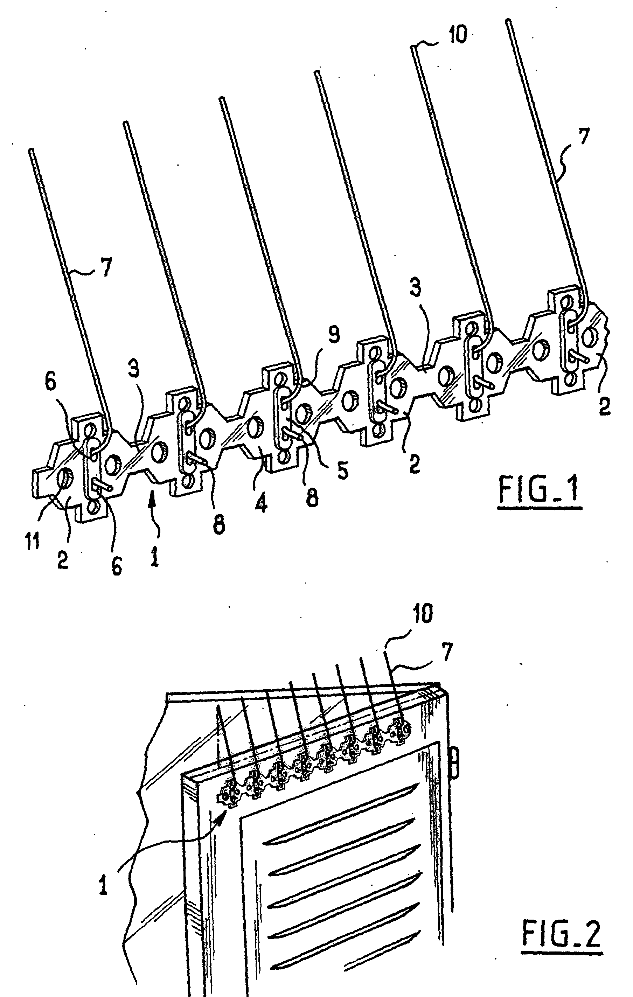

Selon l'invention les tiges métalliques sont à branches de longueurs inégales et comme illustré à la figure 1 forment à l'état monté une rangée de tiges de grande longueur 7 et une rangée de tiges courtes 8.

Comme on le voit sur la figure 1, les tiges de plus grande longueur 7 sont recourbées à l'aplomb des bossages 5 de manière à s'étendre chacune selon un angle faible par rapport au plan de la partie de base 4, l'extrémité libre 10 de chaque tige 7 se trouvant sensiblement au niveau du plan de la partie de base 4 de la plaque de support 1.

Des trous 11 sont ménagés dans les parties de base 4 pour permettre la fixation de la plaque de support 2 à une surface par collage ou de préférence, pour la protection d'éléments en bois, par vissage.

On a illustré aux figures 2 à 4 la mise en place du dispositif selon l'invention sur des battants de volets.

Comme on le voit sur la figure 2, la plaque de support 1 du dispositif selon l'invention est fixée sur la face arrière d'un battant de volet à proximité du chant supérieur de celui-ci que l'on souhaite protéger vis-à-vis de la pose indésirée de volatiles.

Comme on le voit sur la figure 2, les extrémités libres 10 des tiges 7 se trouvent sensiblement à l'aplomb du milieu de la largeur du chant supérieur du battant de volet.

Dans la position d'ouverture des volets la plaque de support du dispositif n'est pas visible et seules les tiges 7 sont apparentes, sans nuire notablement à l'esthétique du volet.

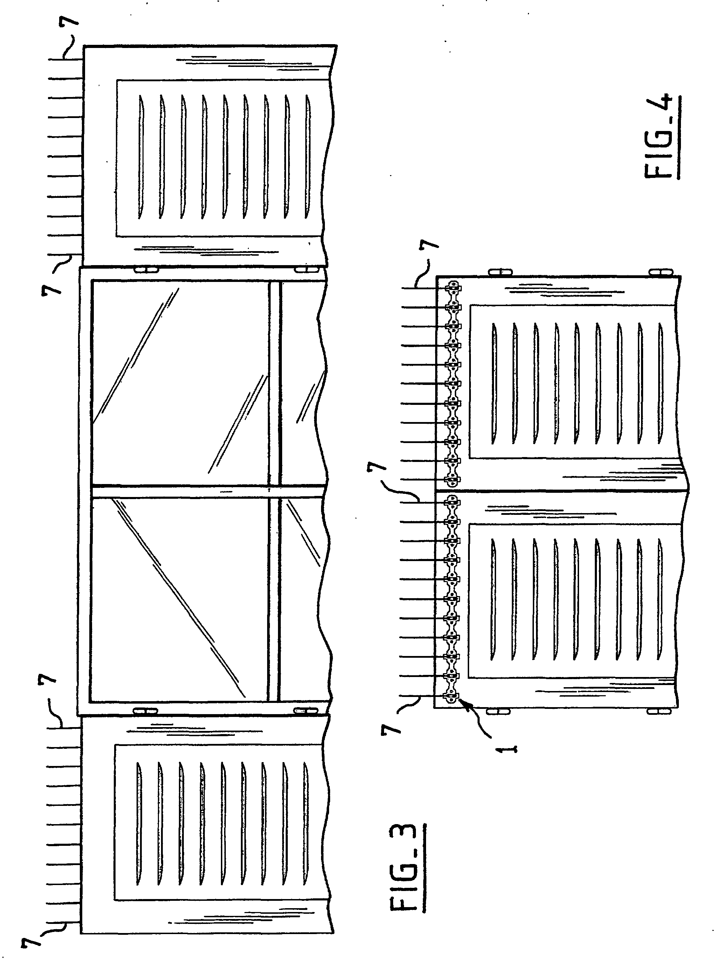

Dans la position de fermeture illustrée à la figure 4, si les battants de volets se trouvent en encoignure, les tiges 7 sont quelque peu pliées vers l'extérieur, ce qui ne pose pas de problème du fait de l'élasticité des tiges.

L'application à des battants de volets n'est nullement limitative.

## Revendications

1. Dispositif pour empêcher le stationnement de volatiles tels que des pigeons, comprenant une plaque de support allongée (1) apte à être fixée par sa face inférieure, notamment par collage ou vissage sur un élément à protéger, comportant en saillie de sa face supérieure au moins une rangée de tiges (7), notamment métalliques, lesdites tiges étant retenues mécaniquement à l'intérieur de trous traversants réalisés dans des bossages (5) en saillie d'une partie de base (4) de la plaque de support (1), **caractérisé par le fait que** chacune desdites tiges (7) est recourbée (9) à sa sortie dudit bossage (5) de manière à s'étendre selon un angle faible, de préférence compris entre environ 10 et environ 30° par rapport au plan de la partie de base (4), les extrémités libres (10) desdites tiges se trouvant sensiblement au niveau dudit plan.

2. Utilisation du dispositif selon la revendication 1 pour des battants de volets, notamment en bois, **caractérisée par le fait que** la plaque de support (1) est fixée, de préférence par vissage, sur la face du volet orientée vers le mur lorsque le volet est en position d'ouverture, au voisinage du bord supérieur du battant.

3. Utilisation selon la revendication 2, **caractérisée par le fait que** les tiges (7) sont agencées de manière que leurs extrémités libres (10), une fois le dispositif mis en place, soient sensiblement à l'aplomb du milieu de la largeur du chant supérieur du battant (figure 2).

## Claims

1. Device to keep birds such as pigeons from perching, comprising an elongated support plate (1) that can be fixed by its lower side, in particular by gluing or bolting to the element to be protected, with at least one row of rods (7) projecting out from its upper side, where such rods may be made of metal and are mechanically retained within through holes made in projecting bosses (5) on the base part (4) of the support plate (1), **characterised in that** each of the said rods (7) is curved (9) at the point where it emerges from the said boss (5) so as to form a narrow angle, preferably from approximately 10° to approximately 30° in relation to the base part (4) so that the free ends (10) of the said rods are more or less level with the said plane.

2. Use of the device described in claim 1 for hinged shutters, particularly made of wood, **characterised in that** the support plate (1) is fixed preferably by bolting to the side of the shutter that is towards the wall when the shutter is open, close to the upper edge of the shutter.

3. Use as described in claim 2, **characterised in that** the rods (7) are arranged so that their free ends (10) are more or less vertically aligned with the middle of the width of the upper edge of the shutter (figure 2) when the device is in place.

## Patentansprüche

1. Vorrichtung, um den Aufenthalt von Geflügel wie Tauben zu verhindern, mit einer länglichen Tragplatte (1) die dazu vorgesehen ist, um über ihr Unterteil befestigt zu werden, insbesondere durch Ankleben oder durch Verschraubung auf ein zu schützendes Element, mit mindestens einer Schaftreihe (7) insbesondere aus Metall, die von derer Vorderseite herausragt, wobei die Schäfte mechanisch innerhalb von Durchgangsbohrungen gehalten sind, die in aus von einem Fußteil (4) der Tragplatte herausragende Wülsten (5) ausgeführt sind, **dadurch gekennzeichnet, dass** jede der genannten Schäfte (7) an seinem Ausgang aus dem genannten Wulst (1) derart gebogen (9) ist, das er sich in einem geringen Winkel erstreckt, bevorzugt zwischen etwa 10° und etwa 30° in bezug auf die Fußteilebene (4), wobei die freien Ende (10) der genannten Schäfte wesentlich auf Höhe der genannten Ebene liegen.

2. Benutzung der Vorrichtung nach Anspruch 1 für Fensterladenflügel, insbesondere aus Holz, **dadurch gekennzeichnet dass** die Tragplatte (1) bevorzugt durch Verschraubung in der unmittelbaren Nähe der oberen Flügelkante auf die Fensterladenseite befestigt ist, die wenn sich der Laden in einer Öffnungsstellung befindet zur Mauer orientiert ist.

3. Benutzung nach Anspruch 2, **dadurch gekennzeichnet, dass** die Schäfte (7) derart angeordnet sind, dass ihre freien Enden (10) nach Anbringung der Vorrichtung wesentlich senkrecht zur Mitte der Breitseite der oberen Schmalseite des Flügels liegen.
